# EUROPÄISCHE PATENTANMELDUNG

(11) **EP 4 555 857 A1**
(43) Veröffentlichungstag der Anmeldung: **21.05.2025**
(21) Anmeldenummer: 23210662.5
(22) Anmeldetag: 17.11.2023
(51) Int. Cl.: A01K 9/00

(54) **NUCKEL ZUR FÜTTERUNG VON NUTZTIEREN**

(71) Anmelder: Holm, Hannes, 24784 Westerrönfeld (DE)
(72) Erfinder: Holm, Hannes, 24784 Westerrönfeld (DE)
(74) Vertreter: Hauck Patentanwaltspartnerschaft mbB

(57) **Zusammenfassung**

Nuckel (10) zur Fütterung von Nutztieren, insbesondere Kälbern, mit einem Halteabschnitt (12) an einem hinteren Ende des Nuckels und einer Austrittsöffnung (28) an einem vorderen Ende des Nuckels, wobei die Austrittsöffnung asymmetrisch zu einer Mittellängsachse (18) des Nuckels ausgebildet ist.

## Beschreibung

Die Erfindung betrifft einen Nuckel zur Fütterung von Nutztieren, insbesondere von Kälbern. An einem hinteren Ende hat der Nuckel einen Halteabschnitt, am vorderen Ende eine Austrittsöffnung.

Die Tiere umschließen derartige Nuckel mit dem Maul und versorgen sich über den Nuckel mit einem flüssigen Nahrungsmittel, ähnlich wie in der Natur am Euter eines Muttertiers. Der Nuckel ist mit einem Vorratsbehälter für das flüssige Nahrungsmittel verbunden. Im einfachsten Fall ist der Nuckel an einem Tränkeeimer oder an einer Trinkflasche befestigt, häufig jedoch an einem Tränkeautomaten, mit dem die Zubereitung und die Abgabe des Futtermittels kontrolliert und das Trinkverhalten der Tiere gegebenenfalls überwacht werden kann.

Der Nuckel ist in aller Regel fest angeordnet, wobei das vordere Ende mit der Austrittsöffnung zumeist mehr oder weniger stark nach unten weist. Auch eine waagerechte Anordnung der Nuckel ist möglich. Die Austrittsöffnung herkömmlicher Nuckel ist am vorderen Ende mittig angeordnet.

Um zur Gesunderhaltung der Nutztiere hygienische Fütterungsbedingungen einzuhalten, können unterschiedliche, den Nuckel betreffende Maßnahmen getroffen werden. Bei Verwendung von Trinkflaschen oder Tränkeeimern ist eine häufige, manuelle oder maschinelle Reinigung der Nuckel erforderlich. In Verbindung mit Tränkeautomaten ist ein automatischer Spülvorgang bekannt, mit Frischwasser und gegebenenfalls zugesetztem Reinigungsmittel. Bei sogenannten Abrufständen ist zusätzlich ein Besprühen der Außenseite des Nuckels mit einem Desinfektionsmittel bekannt, wofür der Nuckel für die Dauer des Desinfektionsvorgangs den Nutztieren entzogen wird, beispielsweise durch eine Klappe.

Davon ausgehend ist es die Aufgabe der Erfindung, einen Nuckel zur Fütterung von Nutztieren zur Verfügung zu stellen, der mit einfachen Mitteln hygienischere Fütterungsbedingungen herstellt.

Diese Aufgabe wird gelöst durch den Nuckel mit den Merkmalen des Anspruchs 1. Vorteilhafte Ausgestaltungen sind in den Unteransprüchen angegeben.

Der Nuckel dient zur Fütterung von Nutztieren, insbesondere von Kälbern, und hat einen Halteabschnitt an einem hinteren Ende des Nuckels und eine Austrittsöffnung an einem vorderen Ende des Nuckels, wobei die Austrittsöffnung asymmetrisch zu einer Mittellängsachse des Nuckels ausgebildet ist.

Der Halteabschnitt ermöglicht eine Befestigung des Nuckels zum Beispiel an einem Tränkeeimer oder an einem Abrufstand eines Tränkeautomaten. Durch die Austrittsöffnung kann das Nutztier das flüssige Nahrungsmittel entnehmen.

Zwischen dem Halteabschnitt und dem vorderen Ende kann der Nuckel einen im Wesentlichen zylindrischen Schaft aufweisen. Das vordere Ende des Schafts kann in das vordere Ende des Nuckels übergehen. Der Halteabschnitt ist am hinteren Ende des Schaftabschnitts angeordnet und kann beispielsweise einen Flansch oder eine Verdickung für eine Klemmhalterung aufweisen. Im Inneren des Nuckels befindet sich ein Hohlraum, durch den das flüssige Nahrungsmittel vom hinteren Ende des Nuckels bis zur Austrittsöffnung hindurchströmen kann. Dieser Hohlraum ist durch eine Wandung des Nuckels begrenzt. Die Austrittsöffnung tritt durch die Wandung hindurch. Die Wandung kann im Bereich des Schafts und/oder des vorderen Endes eine Dicke von zum Beispiel mindestens 2 mm aufweisen. Der Nuckel insgesamt, aber auch die einzelnen Abschnitte, insbesondere der Halteabschnitt, das vordere Ende und der genannte Schaft können eine rotationssymmetrische oder annähernd rotationssymmetrische Form aufweisen. Die Mittellängsachse entspricht der Mittelachse dieser rotationssymmetrischen Form. Sie tritt in der Regel durch die Mitte des vorderen Abschnitts und durch die Mitte des Halteabschnitts hindurch.

Bei der Erfindung ist die Austrittsöffnung asymmetrisch zur Mittellängsachse des Nuckels ausgebildet. Dadurch kann der Nuckel in der Gebrauchsposition so angeordnet werden, dass sich die Austrittsöffnung etwa am tiefsten Punkt des Nuckels befindet. Im Vergleich zu herkömmlichen Nuckeln mit einer mittig angeordneten Austrittsöffnung wird dadurch der Verbleib einer Restmenge flüssigen Nahrungsmittels im Hohlraum des Nuckels in einem Bereich unterhalb der Austrittsöffnung vermieden.

Der Erfinder hat erkannt, dass nach einem Fütterungsvorgang im Nuckel verbleibende Restmengen schnell zu einer erhöhten Keimbelastung bei einem nachfolgenden Fütterungsvorgang führen. Durch die asymmetrische Anordnung der Austrittsöffnung wird eine vollständige Entleerung des Nuckels begünstigt und die mit einer verbleibenden Restmenge einhergehende Keimbelastung wirksam verhindert bzw. j ebenfalls spürbar reduziert.

Versuche haben ergeben, dass die von der Mittellängsachse abweichende Anordnung der Austrittsöffnung den gewohnten Fütterungsvorgang nicht beeinträchtigt. Insbesondere konnte nicht beobachtet werden, dass die außermittig angeordnete Austrittsöffnung von den Nutztieren durch die gewohnten Kau- und Saugbewegungen bei der Tränkeaufnahme verschlossen wird.

In einer Ausgestaltung ist die Austrittsöffnung und/oder ein Mittelpunkt der Austrittsöffnung in einem Abstand von der Mittellängsachse angeordnet. Der Mittelpunkt der Austrittsöffnung ist durch den Schwerpunkt des Öffnungsquerschnitts definiert. Er kann sich in einem Abstand von der Mittellängsachse befinden, auch wenn die Mittellängsachse durch einen seitlichen Bereich des Öffnungsquerschnitts hindurchtritt.

Befindet sich die Austrittsöffnung insgesamt in einem Abstand von der Mittellängsachse, liegt kein Teil des Öffnungsquerschnitts auf der Mittellängsachse. In jedem Fall kann durch die Wahl eines geeigneten Abstands, der idealerweise an die vorgesehene Gebrauchsposition des Nuckels angepasst ist, eine Anordnung der Austrittsöffnung am tiefsten Punkt des Nuckels erreicht werden.

In einer Ausgestaltung beträgt der Abstand mindestens 5 mm. Der optimale Abstand hängt von der Geometrie des vorderen Endes des Nuckels und der Gebrauchsposition des Nuckels ab. Ist die Gebrauchsposition bekannt, kann für jede Geometrie des Nuckels ein optimaler Abstand festgelegt werden, bei dem sich die Austrittsöffnung am tiefsten Punkt des Nuckels befindet.

In einer Ausgestaltung weist der Nuckel am vorderen Ende eine halbkugelförmige, konische oder topfförmige Spitze mit einem Außendurchmesser auf, wobei eine Linie von der Austrittsöffnung zu einem Punkt auf der Mittellängsachse, der die Hälfte des Außendurchmessers vom vorderen Ende der Spitze entfernt ist, einen Winkel mit der Mittellängsachse im Bereich von 15° bis 90° einschließt. Der Winkel kann bevorzugt so gewählt werden, dass er der Neigung der Mittellängsachse des Nuckels in der Gebrauchsposition relativ zur Horizontalen entspricht. Dann befindet sich die Austrittsöffnung am tiefsten Punkt des Nuckels, jedenfalls bei halbkugelförmiger oder annähernd halbkugelförmiger Geometrie der Spitze.

In einer Ausgestaltung weist die Austrittsöffnung in einem unverformten Zustand des Nuckels einen Öffnungsquerschnitt von 1 mm² oder mehr auf. Der Öffnungsquerschnitt kann wahlweise auch 2 mm² oder mehr oder sogar 5 mm² oder mehr aufweisen. Abhängig von den Eigenschaften des flüssigen Futtermittels sorgt eine ausreichende Größe der Austrittsöffnung dafür, dass eine nach einem Fütterungsvorgang im Hohlraum des Nuckels verbliebene Restmenge durch die Schwerkraft aus der Austrittsöffnung abfließt. Bei zu geringem Öffnungsquerschnitt können Adhäsion und Viskosität der Flüssigkeit einer vollständigen Entleerung entgegenwirken.

In einer Ausgestaltung ist die Austrittsöffnung in einem unverformten Zustand des Nuckels geschlossen. Dies ist beispielsweise bei einer von einem oder mehreren Schlitzen gebildeten Austrittsöffnung der Fall. Erst durch eine Verformung des Nuckels durch das Nutztier und/oder durch Saugen an dem Nuckel öffnet sich die Austrittsöffnung. Wird der Nuckel mit einem einfachen Vorratsbehälter wie einer Trinkflasche oder einem Tränkeeimer kombiniert, verhindert das automatische Verschließen der Austrittsöffnung ein unkontrolliertes Auslaufen des Behälters. Die für die Erfindung wichtige, möglichst vollständige Entleerung des Nuckels tritt dennoch ein, sofern das Nutztier die Nahrungsmittelration vollständig aufnimmt.

In einer Ausgestaltung weist die Austrittsöffnung mindestens einen Schlitz auf, der sich bei der Verformung des Nuckels und/oder durch Saugen eines Nutztiers an dem Nuckel öffnet. Beispielsweise können zwei oder mehr Schlitze zu einem Kreuz oder einem Stern kombiniert sein. Durch Verformung des Nuckels bildet sich eine hinreichend große Austrittsöffnung.

In einer Ausgestaltung weist der mindestens eine Schlitz eine Längsrichtung auf, die zur Mittellängsachse weist. Damit ist gemeint, dass eine den Verlauf des Schlitzes aufnehmende, gedachte Gerade die Mittellängsachse schneidet. Der besondere Vorteil dieser Anordnung besteht darin, dass der Schlitz in der vorgesehenen Gebrauchsposition des Nuckels, in der die Austrittsöffnung nach unten weist, etwa vertikal ausgerichtet ist. Die Verformung des Nuckels durch das Nutztier erfolgt vorwiegend durch Krafteinwirkung von oben und unten, sodass sich ein vertikal angeordneter Schlitz besonders gut öffnet.

In einer Ausgestaltung weist der Halteabschnitt einen Querschnitt auf, der nicht punktsymmetrisch zur Mittellängsachse ist. Dadurch wird erreicht, dass der Nuckel in oder an einer geeignet geformten Nuckelaufnahme (insbesondere ganz oder abschnittsweise komplementär geformt) nur in einer einzigen Drehstellung montiert werden kann. In Verbindung mit einer entsprechenden Nuckelaufnahme wird dadurch sichergestellt, dass die Austrittsöffnung in der Gebrauchsposition stets in der gewünschten Weise nach unten weist.

In einer Ausgestaltung weist der Halteabschnitt in einem Abstand von der Mittellängsachse einen Vorsprung und/oder eine Ausnehmung auf. Bei dieser Variante einer nicht punktsymmetrischen Ausbildung des Halteabschnitts ist das Montieren des Nuckels an einer geeignet geformten Nuckelaufnahme besonders einfach. Der Vorsprung bzw. die Ausnehmung am Halteabschnitt ist gut erkennbar, sodass die Montage in der gewünschten Orientierung leicht von der Hand geht.

In einer Ausgestaltung liegt der Vorsprung bzw. die Ausnehmung bezüglich der Mittellängsachse der Austrittsöffnung gegenüber. Das zur Ausrichtung in den Blick zu nehmende Merkmal des Nuckels befindet sich bei der Montage dann oben, was die Abläufe weiter vereinfacht.

In einer Ausgestaltung ist der Nuckel mit einer Abgabevorrichtung kombiniert, die eine Nuckelaufnahme und einen Behälter für ein flüssiges Nahrungsmittel aufweist. Die Nuckelaufnahme ist zur Montage des Nuckels an der Abgabevorrichtung vorgesehen und kann insbesondere so ausgebildet sein, dass die Montage nur in der gewünschten Orientierung mit nach unten weisender Austrittsöffnung des Nuckels möglich ist.

In einer Ausgestaltung weist die Abgabevorrichtung eine Pumpe und/oder ein Ventil auf, sodass die Abgabe des flüssigen Nahrungsmittels über den Nuckel gesteuert werden kann. Insbesondere kann die Abgabe durch Schließen des Ventils bzw. Stoppen der Pumpe gestoppt werden. Diese Variante der Erfindung ist besonders zur Kombination mit einem Nuckel mit ständig geöffneter Austrittsöffnung geeignet. Bei gestoppter Abgabe kann sich der Nuckel durch die Austrittsöffnung vollständig entleeren, ohne dass der Vorratsbehälter ausläuft. Um die vollständige Entleerung des Nuckels zu befördern, kann die Abgabevorrichtung bei gestoppter Abgabe des flüssigen Nahrungsmittels eine Belüftungsleitung öffnen, durch die Luft in den Hohlraum des Nuckels einströmen kann.

In einer Ausgestaltung ist die Abgabevorrichtung dazu eingerichtet, den Nuckel mit Druckluft zu beaufschlagen, sodass die Druckluft aus der Austrittsöffnung austritt. Diese Ausgestaltung kann auch mit einem herkömmlichen Nuckel, bei dem die Austrittsöffnung mittig angeordnet ist, sinnvoll eingesetzt werden. Durch die Druckluft kann eine im Nuckel befindliche Restmenge durch die Austrittsöffnung ausgestoßen werden. Dadurch werden selbst geringste Restmengen, die durch Adhäsion im Bereich der Austrittsöffnung anderenfalls im Nuckel verbleiben können, weitgehend vollständig entfernt, was die möglicherweise entstehende Keimbelastung noch weiter reduziert. Um den Nuckel mit Druckluft zu beaufschlagen, kann die Abgabevorrichtung zum Beispiel einen Druckbehälter und/oder eine Pumpe, mit der Druckluft erzeugt werden kann, aufweisen. Wahlweise kann auch eine in der Abgabevorrichtung befindliche Förderpumpe für das flüssige Nahrungsmittel zeitweise zum Erzeugen der Druckluft eingesetzt werden.

In einer Ausgestaltung weist die Abgabevorrichtung eine elektronische Steuerung auf, die dazu eingerichtet ist, nach Bereitstellen eines flüssigen Nahrungsmittels mithilfe der Druckluft eine Restentleerung des Nuckels zu bewirken. Die Steuerung kann insbesondere so programmiert sein, dass automatisch nach jedem Fütterungsvorgang ein geeigneter Druckluftstoß abgegeben wird.

Nachfolgend wird die Erfindung anhand von in Figuren dargestellten Ausführungsbeispielen näher erläutert. Es zeigen:
- Fig. 1: einen Nuckel in einer schematischen Querschnittsdarstellung,
- Fig. 2: einen weiteren Nuckel in einer schematischen Ansicht von der Seite,
- Fig. 3: einen herkömmlichen Nuckel in zwei unterschiedlichen Gebrauchspositionen in schematischen Ansichten von der Seite.

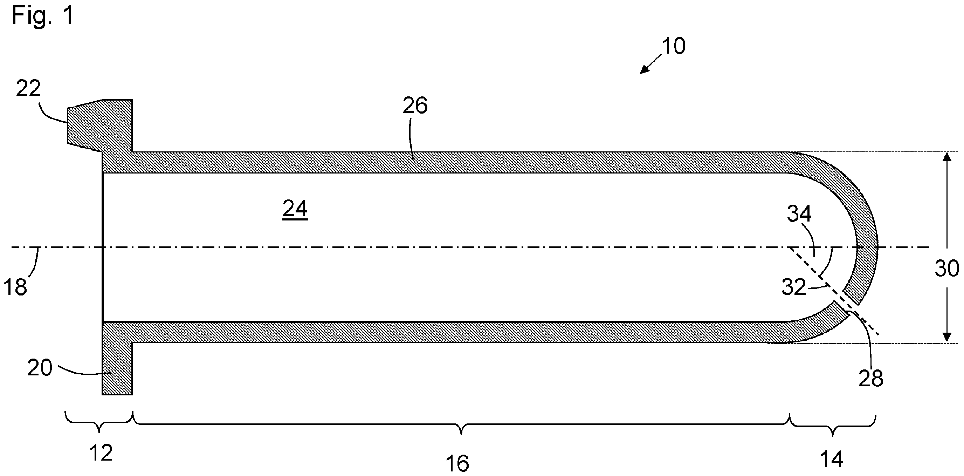

Der Nuckel 10 aus Figur 1 hat einen Halteabschnitt 12, der ein hinteres Ende des Nuckels 10 bildet, sowie einen vorderen Abschnitt 14. Zwischen dem Halteabschnitt 12 und dem vorderen Abschnitt 14 befindet sich ein Schaft 16, der im Querschnitt etwa kreiszylindrisch ausgebildet ist. Die Mittellängsachse 18 des Nuckels 10 verläuft von der Mitte des Halteabschnitts 12 durch die Mitte des vorderen Abschnitts 14.

Der Halteabschnitt 12 weist einen ringförmig nach außen weisenden Flansch 20 auf sowie einen nach hinten weisenden Vorsprung 22, der in Verbindung mit einer geeigneten, insbesondere komplementär geformten Nuckelaufnahme (nicht gezeigt) eine "Verdrehsicherung" bildet, welche die gewünschte Drehstellung des Nuckels 10 in der Gebrauchsposition sicherstellt.

Im Inneren des Nuckels 10 befindet sich ein Hohlraum 24, der von der Wandung 26 des Nuckels 10 umgeben ist. Am vorderen Ende 14 weist der Nuckel 10 eine Austrittsöffnung 28 auf, die durch die Wandung 26 hindurchtritt. Die Austrittsöffnung 28 hat einen Öffnungsquerschnitt von einigen Quadratmillimetern und ist im unverformten Zustand des Nuckels 10 geöffnet. Die Austrittsöffnung 28 ist asymmetrisch zur Mittellängsachse 18 des Nuckels 10 angeordnet und weist einen Abstand von der Mittellängsachse 18 auf.

Am vorderen Ende 14 hat der Nuckel 10 eine etwa halbkugelförmige Spitze mit einem Außendurchmesser 30. Die halbkugelförmige Spitze geht in den Schaft 16, der denselben Außendurchmesser aufweist, über.

Ebenfalls in Figur 1 eingezeichnet ist eine gedachte Linie 32, die an einem Punkt auf der Mittellängsachse 18 beginnt, der die Hälfte des Außendurchmessers 30 vom vorderen Ende der Spitze entfernt angeordnet ist. Von diesem Punkt aus verläuft die Linie 32 durch die Austrittsöffnung 28 hindurch. Die Linie 32 schließt mit der Mittellängsachse 18 einen Winkel 34 ein, der im gezeigten Beispiel etwa 45° beträgt. In einer Gebrauchsposition, in der die Mittellängsachse 18 des Nuckels 10 gegenüber der Horizontalen um den Winkel 34 nach unten geneigt ist, bildet die Austrittsöffnung 28 dann den tiefsten Punkt des Nuckels 10.

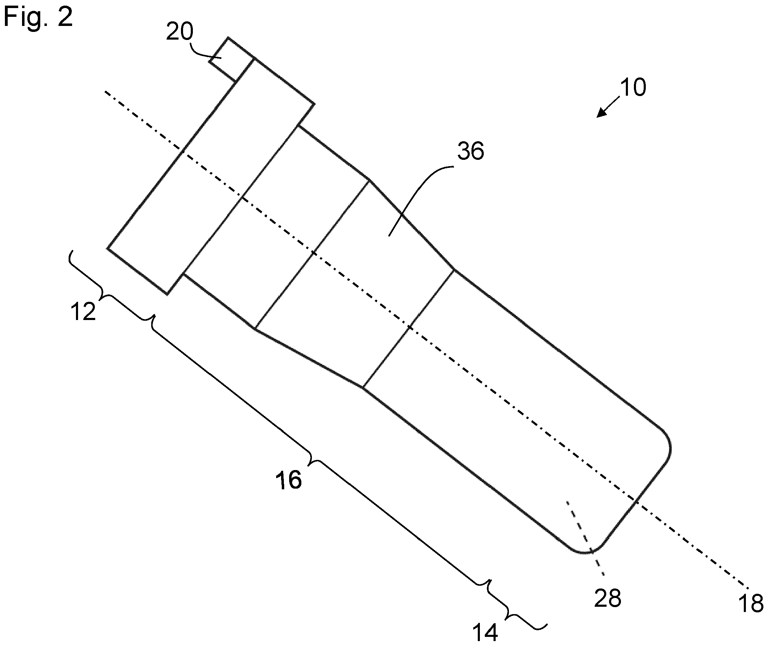

Figur 2 zeigt einen anderen Nuckel 10, der in einer Außenansicht von der Seite und schematisch vereinfacht dargestellt ist. Er hat einen Halteabschnitt 12, ein vorderes Ende 14, das etwa topfförmig ausgebildet ist, und einen dazwischenliegenden Schaft 16. Die Lage der Austrittsöffnung 28 ist durch eine gestrichelte Linie angedeutet. Sie befindet sich in der in Figur 2 gezeigten Gebrauchsposition des Nuckels 10 am tiefsten Punkt des Nuckels 10. Der Halteabschnitt 12 des Nuckels 10 aus Figur 2 weist ebenfalls einen Vorsprung 22 auf, der bezüglich der Mittellängsachse 18 der Austrittsöffnung 28 gegenüberliegend angeordnet ist. Der Schaft 16 weist in der Mitte einen konischen Abschnitt 36 auf.

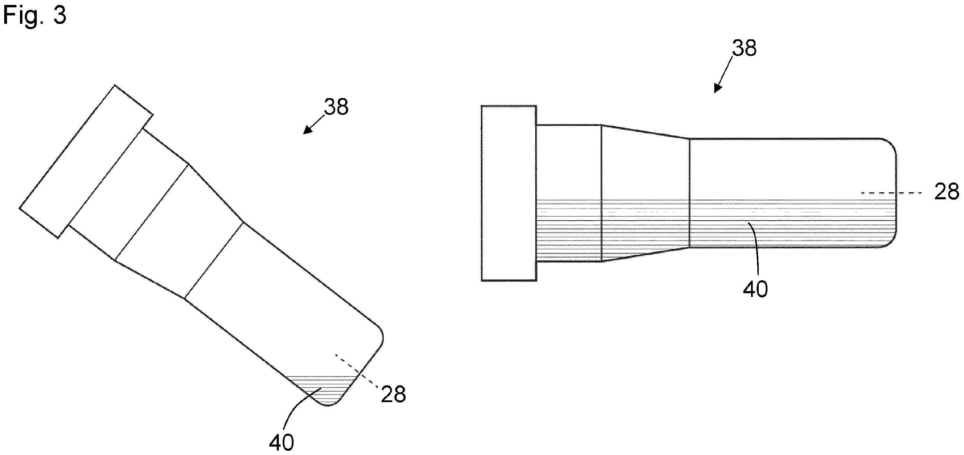

Figur 3 zeigt einen herkömmlichen Nuckel 38, dessen Grundform derjenigen des Nuckels 10 aus Figur 2 entspricht. Die Austrittsöffnung 28 des Nuckels 38 ist jedoch nicht asymmetrisch zur Mittellängsachse, sondern mittig, genau auf der Mittellängsachse liegend, angeordnet.

Figur 3 zeigt den Nuckel 38 im linken Teil in einer Gebrauchsstellung, in der die Mittellängsachse in einem Winkel von etwa 45° nach unten weist, was für viele Fütterungseinrichtungen mit einem Nuckel 38 typisch ist. Die Austrittsöffnung 28 befindet sich deutlich oberhalb eines tiefsten Punkts des Nuckels 38, sodass sich im Inneren des Nuckels 38 eine Restmenge 40 des flüssigen Nahrungsmittels ansammelt, die durch die Austrittsöffnung 28 weder ablaufen, noch durch Saugen herausbefördert werden kann.

Im rechten Teil der Figur 3 ist derselbe Nuckel 38 in einer horizontalen Gebrauchsstellung gezeigt, was etwa der typischen Situation bei einer Fütterung mit einem Tränkeeimer entspricht. In dieser Gebrauchsstellung befindet sich die gesamte untere Hälfte des innerhalb des Nuckels 38 angeordneten Hohlraums unterhalb der Austrittsöffnung 28, sodass sich in dem Nuckel 38 eine erhebliche Restmenge 40 ansammelt, die nicht ohne weiteres entnommen werden kann.

### Liste der Bezugszeichen

- 10: Nuckel
- 12: Halteabschnitt
- 14: vorderer Abschnitt
- 16: Schaft
- 18: Mittellängsachse
- 20: Flansch
- 22: Vorsprung
- 24: Hohlraum
- 26: Wandung
- 28: Austrittsöffnung
- 30: Außendurchmesser
- 32: Linie
- 34: Winkel
- 36: konischer Abschnitt
- 38: Nuckel (herkömmlich)
- 40: Restmenge

## Patentansprüche

1. Nuckel (10) zur Fütterung von Nutztieren, insbesondere Kälbern, mit einem Halteabschnitt (12) an einem hinteren Ende des Nuckels (10) und einer Austrittsöffnung (28) an einem vorderen Ende des Nuckels (10), **dadurch gekennzeichnet, dass** die Austrittsöffnung (28) asymmetrisch zu einer Mittellängsachse (18) des Nuckels (10) ausgebildet ist.

2. Nuckel (10) nach Anspruch 1, **dadurch gekennzeichnet, dass** die Austrittsöffnung (28) und/oder ein Mittelpunkt der Austrittsöffnung (28) in einem Abstand von der Mittellängsachse (18) angeordnet ist.

3. Nuckel (10) nach Anspruch 2, **dadurch gekennzeichnet, dass** der Abstand mindestens 5 mm beträgt.

4. Nuckel (10) nach einem der Ansprüche 1 bis 3, **dadurch gekennzeichnet, dass** der Nuckel (10) am vorderen Ende eine halbkugelförmige, konische oder topfförmige Spitze mit einem Außendurchmesser (30) aufweist, wobei eine Linie (32) von der Austrittsöffnung (28) zu einem Punkt auf der Mittellängsachse (18), der die Hälfte des Außendurchmessers (30) vom vorderen Ende der Spitze entfernt ist, einen Winkel (34) mit der Mittellängsachse (18) im Bereich von 15° bis 90° einschließt.

5. Nuckel (10) nach einem der Ansprüche 1 bis 4, **dadurch gekennzeichnet, dass** die Austrittsöffnung (28) in einem unverformten Zustand des Nuckels (10) einen Öffnungsquerschnitt von 1 mm² oder mehr aufweist.

6. Nuckel (10) nach einem der Ansprüche 1 bis 4, **dadurch gekennzeichnet, dass** die Austrittsöffnung (28) in einem unverformten Zustand des Nuckels (10) geschlossen ist.

7. Nuckel (10) nach einem der Ansprüche 1 bis 6, **dadurch gekennzeichnet, dass** die Austrittsöffnung (28) mindestens einen Schlitz aufweist, der sich bei einer Verformung des Nuckels (10) und/oder durch Saugen eines Nutztiers an dem Nuckel (10) öffnet.

8. Nuckel (10) nach Anspruch 7, **dadurch gekennzeichnet, dass** der mindestens eine Schlitz eine Längsrichtung aufweist, die zur Mittellängsachse (18) weist.

9. Nuckel (10) nach einem der Ansprüche 1 bis 8, **dadurch gekennzeichnet, dass** der Halteabschnitt (12) einen Querschnitt aufweist, der nicht punktsymmetrisch zur Mittellängsachse (18) ist.

10. Nuckel (10) nach einem der Ansprüche 1 bis 9, **dadurch gekennzeichnet, dass** der Halteabschnitt (12) in einem Abstand von der Mittellängsachse (18) einen Vorsprung (22) und/oder eine Ausnehmung aufweist.

11. Nuckel (10) nach Anspruch 10, **dadurch gekennzeichnet, dass** der Vorsprung (22) bzw. die Ausnehmung bezüglich der Mittellängsachse (18) der Austrittsöffnung (28) gegenüberliegt.

12. Nuckel (10) nach einem der Ansprüche 1 bis 11 mit einer Abgabevorrichtung, die eine Nuckelaufnahme und einen Behälter für ein flüssiges Nahrungsmittel aufweist.

13. Nuckel (10) mit Abgabevorrichtung nach Anspruch 12, **dadurch gekennzeichnet, dass** die Abgabevorrichtung eine Pumpe und/oder ein Ventil aufweist, sodass die Abgabe des flüssigen Nahrungsmittels über den Nuckel (10) gesteuert werden kann.

14. Nuckel (10) mit Abgabevorrichtung nach Anspruch 12 oder 13, **dadurch gekennzeichnet, dass** die Abgabevorrichtung dazu eingerichtet ist, den Nuckel (10) mit Druckluft zu beaufschlagen, sodass die Druckluft aus der Austrittsöffnung (28) austritt.

15. Nuckel (10) mit Abgabevorrichtung nach Anspruch 14, dass die Abgabevorrichtung eine elektronische Steuerung aufweist, die dazu eingerichtet ist, nach Bereitstellen eines flüssigen Nahrungsmittels mithilfe der Druckluft eine Restentleerung des Nuckels (10) zu bewirken.
